# EUROPÄISCHE PATENTSCHRIFT

(11) **EP 2 314 476 B1**
(45) Veröffentlichungstag und Bekanntmachung des Hinweises auf die Patenterteilung: **20.08.2014**
(21) Anmeldenummer: 10186607.7
(22) Anmeldetag: 05.10.2010
(51) Int. Cl.: B60N 2/60, B60N 3/00, B60N 3/04

(54) **Schutzfoliensatz**
Protective film set
Ensemble de film de protection

(30) Priorität: 23.10.2009 DE 102009045963
(43) Veröffentlichungstag der Anmeldung: 27.04.2011
(73) Patentinhaber: Horn & Bauer GmbH & Co. KG, 34613 Schwalmstadt (DE)
(72) Erfinder: Mohr, Thomas, 35279, Neustadt-Momberg (DE)
(74) Vertreter: REHBERG HÜPPE + PARTNER

(56) Entgegenhaltungen:
- EP-A2- 0 230 225
- EP-A2- 2 008 866
- DE-U1- 8 023 722

## Beschreibung

### TECHNISCHES GEBIET DER ERFINDUNG

Die vorliegende Erfindung betrifft einen Schutzfoliensatz mit mehreren Schutzfolien, die bspw. bei der Durchführung von Reparaturarbeiten zum Abdecken von Fahrzeugteilen separat voneinander einsetzbar sind. Weiterhin betrifft die Erfindung eine Folienbahn.

### STAND DER TECHNIK

Schutzfoliensätze, die in der Praxis auch als "Service-Sets" bezeichnet werden, dienen dazu, in Werkstätten für Kraftfahrzeuge bei der Durchführung von Reparatur- und Wartungsarbeiten Fahrzeugteile abzudecken, um diese vor Verschmutzungen zu schützen, die beispielsweise dadurch entstehen, dass ein Monteur mit verschmutzten Händen und/oder verschmutzter Kleidung auf einem Fahrersitz Platz nimmt und/oder das Kraftfahrzeug bewegt, beispielsweise von einem Parkplatz in die Werkstatt fährt oder umgekehrt. Hierzu sind in einem derartigen Schutzfoliensatz Schutzfolien vorhanden, mit welchen beispielsweise ein Fahrersitz, ein Lenkrad, ein Fußraum, ein Handbremshebel oder Wählhebel (Schalthebel) abgedeckt werden kann. Ebenfalls Einsatz finden können die Schutzbezüge vor einer Erstauslieferung eines Kraftfahrzeugs an einen Kunden. Möglich ist, dass die Schutzbezüge für eine einmalige Verwendung oder für einen mehrmaligen Einsatz eingesetzt werden.

Beispielsweise wird unter der Kennzeichnung "CleanSet" von dem Unternehmen SERWO ein Schutzfoliensatz vertrieben, welcher
- eine Schutzfolie für einen Fahrzeugsitz,
- eine Schutzfolie für den Fußraum,
- eine Schutzfolie für ein Lenkrad, welche mit einem Gummizug ausgebildet ist,
- eine Schutzfolie für einen Wählhebel sowie
- eine Schutzfolie für einen Handbremshebel
aufweist. Diese Schutzfolien sind lose in einem Beutel verpackt, der vor Gebrauch von dem Monteur zu öffnen ist. Der als Verpackungsbehälter für sämtliche zu einem Schutzfoliensatz gehörenden Schutzfolien dienende Beutel wird nicht weiter verwendet und muss dem Abfall zugeführt werden. Mehrere derartige Beutel mit darin angeordneten Schutzfolien werden in der Werkstatt über eine Entnahmebox, die über eine Wandhalterung gehalten ist, bereitgestellt.

Soll insbesondere aus Gründen der Abfallminimierung und zur Reduzierung des Materialeinsatzes auf einen Beutel zur Aufnahme der einzelnen Schutzfolien verzichtet werden, ist es beispielsweise aus DE-GM 8 023 722 bekannt, einzelne Schutzfolien eines bestimmten Typs, beispielsweise eine Schutzfolie für einen Fahrersitz, aus einer praktisch endlosen Bahn aus Kunststofffolie herzustellen, wobei die einzelnen Schutzfolien für den Fahrersitz über durchtrennbare Perforationen aneinanderhängend auf eine Vorratsrolle aufgewickelt sind.

Weiterhin ist es bekannt, Schutzfolien für den Fußraum und/oder Schutzfolien für das Lenkrad jeweils in einer großen Anzahl übereinander gestapelt in Kartons aufzubewahren, so dass der Monteur bei der Reparaturarbeit sich jeweils einen Schutzfoliensatz dadurch zusammenstellen kann, dass er beispielsweise eine Schutzfolie für den Fahrzeugsitz von der Rolle abtrennt, sich eine Schutzfolie für das Lenkrad von dem betreffenden nächsten Stapel nimmt und auch eine Schutzfolie für den Fußraum aus der zugehörigen weiteren Verpackungskiste zusammensucht. Da die einzelnen Schutzfolien und deren Aufnahmebehältnisse oft an unterschiedlichen Orten in der Werkstatt aufbewahrt werden, stellt das Zusammensuchen und Zusammenstellen eines Schutzfoliensatzes eine für den Monteur lästige zusätzliche Arbeit dar, die dazu verleitet, nicht alle unbedingt zu einem Schutzfoliensatz gehörenden Schutzfolien herauszusuchen, sondern nur die allernotwendigsten Schutzfolien - beispielsweise bei vorher nicht absehbaren Arbeitsschritten des Monteurs führt diese Aufwandsminimierung aber dann zu einer Verschmutzung der Fahrzeugteile, die gerade mit dem Schutzfoliensatz vermieden werden sollte.

DE 36 01 390 C1 schlägt vor, anstelle des eingangs genannten Beutels eine Tasche oder Faltung einzusetzen, die von einer Schutzfolie des Schutzfoliensatzes selber gebildet ist. In diese von einer Schutzfolie gebildete Tasche werden dann im weiteren Fertigungsprozess des Schutzfoliensatzes die anderen Schutzfolien eingelegt. Weiterhin schlägt die Druckschrift vor, mehrere die Tasche bildende Schutzfolien über Perforationen einer Folienbahn bereitzustellen, wobei dann die einzelnen anderen Schutzfolien in die jeweiligen Taschen der Folienbahn eingelegt werden können. Neben dem Einlegen der Schutzfolien selber kann auch ein Einlegen weiterer, für den Monteur unter Umständen nützlicher Teile erfolgen, beispielsweise Servietten, Putztüchern und dergleichen.

Die Druckschriften DE 10 2007 029 692 A1 und EP 2 008 866 A2 schlagen die Fertigung einer Schutzfolie mit einem Schutzfolienteil, welcher zum Abdecken eines Fahrzeugsitzes ausgebildet ist, sowie einem Schutzfolienteil zum Abdecken eines Fußraumes vor. Die genannten Schutzfolienteile sind mit einem Abschnitt eines Kunststoffschlauches gebildet, dessen geschnittene offene Seiten durch Verschweißungen geschlossen sind. In eine Rücklage des in einen flachen Zustand gefalteten Abschnitts des Kunststoffschlauches ist ein U-förmiger, zungenartiger Einschnitt eingebracht. Dieser Einschnitt begrenzt einerseits eine Ausnehmung des Schutzfolienteils, welche zum Überstülpen dieses Schutzfolienteils über einen Fahrzeugsitzes genutzt werden kann, und bildet andererseits eine Begrenzung der herausklappbaren Zunge, welche das Schutzfolienteil zum Abdecken des Fußraums bildet. In einer Folienbahn können mehrere derartige Schutzfolien über Perforationen miteinander verbunden sein. Hierbei offenbaren die genannten Druckschriften sowohl eine Ausführungsform, bei welcher in der Folienbahn die Schutzfolien mit Ihrer Längsachse in Richtung der Längsachse der Folienbahn orientiert sind als auch eine Ausführungsform, bei welcher die Längsachsen der Schutzfolien quer zur Längsachse der Folienbahn orientiert sind.

### AUFGABE DER ERFINDUNG

Der vorliegenden Erfindung liegt die Aufgabe zugrunde, einen Schutzfoliensatz vorzuschlagen, welcher hinsichtlich
- der Herstellung,
- der Bevorratung,
- des Materialeinsatzes,
- der Abfallreduzierung und/oder
- des Gebrauchs
verbessert ist. Weiterhin liegt der Erfindung die Aufgabe zugrunde, eine entsprechend verbesserte Folienbahn herzustellen.

### LÖSUNG

Die Aufgabe der Erfindung wird erfindungsgemäß gelöst mit den Merkmalen des unabhängigen Patentanspruchs 1. Weitere erfindungsgemäße Ausgestaltungen eines Schutzfoliensatzes ergeben sich entsprechend den abhängigen Patentansprüchen 2 bis 14. Eine weitere Lösung der der Erfindung zugrunde liegenden Aufgabe ist gegeben durch eine Folienbahn gemäß Patentanspruch 15. Weitere Ausgestaltungen einer erfindungsgemäßen Folienbahn sind durch die Merkmale der abhängigen Patentansprüche 16 bis 18 definiert.

### BESCHREIBUNG DER ERFINDUNG

Die Erfindung schlägt erstmals vor, mehrere Schutzfolien eines Schutzfoliensatzes nicht in einem zusätzlichen Beutel anzuordnen oder in einem aufwändigen Verpackungsprozess in eine eine Tasche oder Faltung ausbildende Schutzfolie lose einzulegen, sondern vielmehr mit den Schutzfolien eine Einheit zu bilden. In einer derartigen Einheit sind die Schutzfolien des Schutzfoliensatzes zusammengefasst, was bedeutet, dass der Monteur in der Werkstatt automatisch über die Bestandteile des Schutzfoliensatzes verfügt, ohne diese an unterschiedlichen Orten zusammenzusuchen.

Weiterhin können sich unter Umständen die Herstellung, der Transport und die Bevorratung der Schutzfolien vereinfachen, wenn diese eine Einheit bilden.

Damit die Schutzfolien bestimmungsgemäß separat voneinander durch den Monteur eingesetzt werden können, sind die Schutzfolien in der Einheit lösbar (ohne Einsatz zusätzlicher Werkzeuge wie einer Schere) miteinander verbunden. Beispielsweise ist es möglich, dass der Monteur oder ein anderweitiger Benutzer der Schutzfolien die gesamte Einheit mit den mehreren Schutzfolien aus einem Vorrat gemeinsam entnimmt und dann sukzessive einzelne Schutzfolien aus der Einheit herauslöst und mit der jeweiligen Schutzfolie das zugeordnete Fahrzeugteil abdeckt.

Für die lösbare Verbindung der Schutzfolien zu einer Einheit gibt es vielfältige, beliebige Möglichkeiten. Entscheidend hierbei ist lediglich, dass die gewählte lösbare Verbindung derart ist, dass die einzelnen Schutzfolien aus der Einheit herausgelöst werden können, ohne dass die Schutzfolien selber derartige Beschädigung erleiden, dass diese ihre Funktion zum Abdecken der Fahrzeugteile nicht mehr ausreichend erfüllen können. Beispielsweise können in der Einheit die einzelnen Schutzfolien über ein adhäsives Mittel miteinander verbunden sein, wobei die Klebekraft des adhäsiven Mittels derart gewählt ist, dass bei Aufbringung von auf ein Loslösen einer Schutzfolie aus der Einheit ausgerichteten Trennkräften die Klebekraft des adhäsiven Mittels überwunden werden kann, ohne dass die Schutzfolie selbst geschädigt wird. Möglich wäre auch die Herstellung einer lösbaren Verbindung zwischen einzelnen Schutzfolien der Einheit über Verbindungsbänder u. ä..

Durch die Bereitstellung einer Einheit mit den Schutzfolien kann zusätzlich eine Disziplinierung der Mitarbeiter der Werkstatt zur Aufbringung des vollständigen Schutzes eines Innenraums eines Fahrzeugs mit sämtliche Schutzfolien der Einheit erfolgen, wodurch auch die Einhaltung von Qualitätssicherungs-Normen (bspw. ISO 9000) forciert werden kann.

Gemäß einer bevorzugten Ausgestaltung der Erfindung sind allerdings die Schutzfolien über Perforationen lösbar miteinander verbunden. Derartige Perforationen haben den Vorteil, dass diese einfach in einem Herstellungsprozess herstellbar sind, beispielsweise durch Perforations- oder Schneidmesser oder anderweitige trennende und perforierende Mittel. Andererseits führen Perforationen in Kunststofffolien nicht zu Aufwerfungen, Materialverdickungen u. ä., wie dies für die Zwischenordnung eines adhäsiven Mittels zwischen mehrere Kunststofffolienschichten oder für anderweitige Verbindungen der Fall ist. Schließlich ist ein Trennen von über Perforationen miteinander erbundenen Schutzfolien durch den Benutzer besonders einfach, wobei durch die Vorgabe des Verlaufs der Perforationen bereits während der Herstellung eine exakte Trennlinie vorgegeben werden kann. Über die Dimensionierung der Perforationen gegenüber dem verbleibenden Material zwischen den Perforationen kann darüber hinaus konstruktiv auf einfache Weise vorgegeben werden, welche Trennkräfte aufgebracht werden müssen, um einzelne Schutzfolien aus der Einheit herauszutrennen.

In weiterer Ausgestaltung der Erfindung sind in dem Schutzfoliensatz mehrere Schutzfolien aus einer Kunststofffolie hergestellt. Hierbei kann für diese und folgende Ausgestaltungen eine Kunststofffolie insbesondere
- ein bahnenartiges Kunststoffmaterial sein, welches einschichtig ausgebildet ist,
- ein bahnartiges, einfach oder mehrfaches gefaltetes Kunststoffmaterial sein oder
- ein bahnenartiges, schlauchartiges einfach oder mehrfach geschlitztes oder ungeschlitztes Kunststoffmaterial sein.

Für die Ausbildung mehrerer Schutzfolien aus einer einzigen derartigen Kunststofffolie kann eine Vereinfachung des Herstellungsprozesses erfolgen und/oder der Materialeinsatz minimiert werden.

Ebenfalls möglich ist allerdings, dass bei einem erfindungsgemäßen Schutzfoliensatz mehrere Schutzfolien aus zwei oder mehr miteinander verschweißten Kunststofffolien, insbesondere in einer der zuvor erwähnen Bereitstellungsarten, hergestellt sind. In beispielhafter Ausgestaltung können hierbei die mehreren miteinander verschweißten Kunststofffolien über unterschiedliche physikalische Eigenschaften verfügen, so dass eine Anpassung der einzelnen Schutzfolien entsprechend den geforderten physikalischen Eigenschaften an ihre jeweiligen Einsatzzwecke erfolgen kann. Um lediglich beispielhaft einige physikalische Eigenschaften zu nennen, die für die einzelnen Schutzfolien gleich oder unterschiedlich sein können, wird die
- Foliendicke,
- Transparenz der Folie,
- Rauhigkeit einer Vorder- und/oder Rückseite der Folie,
- die "Klebrigkeit" einer Vorder- und/oder Rückseite der Folie,
- eine etwaige Corona-Behandlung zumindest einer Seite der Folie,
- das Material der Folie mit dessen physikalischen Eigenschaften wie Steifigkeit, Reißfestigkeit, Elastizität u. ä.
genannt. Alternativ oder zusätzlich kann die Folie mindestens eine Kennzeichnung besitzen, beispielsweise eine aufgedruckte Kennzeichnungen, mittels welcher insbesondere darauf hingewiesen wird, für welches Teil des Kraftfahrzeugs die jeweilige Schutzfolie bestimmt ist und/oder wie die Schutzfolie zu benutzen ist. Im Extremfall können die unterschiedlichen optischen Kennzeichnungen in unterschiedlichen Farbgebungen der eingesetzten Kunststofffolien bestehen, so dass die einzelnen Schutzfolien bereits durch die Farbgebung vom Benutzer hinsichtlich Ihrer Einsatzzwecke unterschieden werden können.

Erfindungsgemäß sind in dem Schutzfoliensatz zumindest zwei der folgenden Schutzfolien enthalten: Eine Schutzfolie für einen Fahrzeugsitz, eine Schutzfolie für einen Fußraum, eine Schutzfolie für einen Wählhebel, eine Schutzfolie für eine Kopfstütze, eine Schutzfolie für einen Handbremshebel und/oder eine Schutzfolie für einen Fußraum, einen Fahrzeugsitz und eine Kopfstütze, wobei insbesondere in dem Schutzfoliensatz sämtliche vorgenannten Schutzfolien zu einer Einheit verbunden sind.

In bevorzugter Ausgestaltung der Erfindung ist in dem Schutzfoliensatz eine Schutzfolie enthalten, die einen Schutzfolienteil für einen Fahrzeugsitz sowie einen Schutzfolienteil für einen Fußraum beinhaltet entsprechend den Ausführungsformen gemäß DE 10 2007 029 692 A1 und EP 2 008 866 A2. Ein Einschnitt der Kunststofffolie den Schutzfolienteil für den Fußraum und eine Ausnehmung des Schutzfolienteils für den Fahrzeugsitz begrenzt. Hierbei kann der Einschnitt beispielsweise U-förmig, V-förmig, T-förmig oder parabelförmig ausgebildet sein. Die Schutzfolie kann mit einer Vorderlage und einer Rücklage gebildet sein, wobei der Schutzfolienteil für den Fußraum mit einem durch den Einschnitt begrenzten Teilausschnitt der Rücklage gebildet ist. Möglich ist, dass die Vorderlage und die Rücklage mit unterschiedlichen Materialien, Zusammensetzungen, Additiven, Beschichtungen, mechanischen Eigenschaften, Reibwerten und/oder Rauhigkeiten gebildet sind. Weiterhin möglich ist für diese Ausführungsform, dass ein Verbindungsbereich zwischen den Schutzfolienteilen beabstandet von einem Übergangsbereich von der Vorderlage zu der Rücklage der Schutzfolie angeordnet ist. Möglich ist weiterhin, dass eine schlauchartige Kunststofffolie mit zwei Flachfolien hergestellt ist, die im Bereich ihrer seitlichen Ränder zu einem schlauchartigen Halbzeug miteinander verbunden sind. Hinsichtlich weiterer Details wird auf die Druckschriften DE 10 2007 029 692 A1 und EP 2 008 866 A2 verwiesen, wobei sämtliche offenbarte weiteren Ausgestaltungsmöglichkeiten für die Schutzfolie für den Fahrzeugsitz mit integriertem Schutzfolienteil für den Fußraum in die vorliegende Erfindung integrierbar sind.

In weiterer Ausgestaltung der Erfindung sind die Schutzfolien bzw. ist der mit diesem gebildete Schutzfoliensatz aus einer Kunststofffolie oder zwei oder mehreren miteinander verschweißten Kunststofffolien hergestellt. Dieses Halbzeug in Form der mindestens einen Kunststofffolie besitzt eine Längsachse, die beispielsweise durch die Förderrichtung einer endlos gefertigten Kunststofffolie, eine Längsachse eines Schlauchs mindestens einer Kunststofffolie, eine Faltung einer Kunststofffolie u. ä. vorgegeben sein kann. Unter Zugrundelegung einer derartigen Längsachse ist die Schutzfolie, die für die Abdeckung des Fahrzeugssitzes bestimmt ist, insbesondere mit integriertem Schutzfolienteil für den Fußraum, bei Blickrichtung in Richtung der genannten Längsachse seitlich neben mindestens einer weiteren Schutzfolie, beispielsweise Schutzfolien für Wählhebel, Lenkrad und/oder Handbremshebel, angeordnet. Die Schutzfolie für den Fahrzeugsitz, insbesondere mit integriertem Schutzfolienteil für den Fußraum, ist über in Richtung der Längsachse orientierte Perforationen mit der mindestens einen weiteren Schutzfolie verbunden. Somit sind in der Einheit die Schutzfolie für den Fahrzeugsitz einerseits und die weiteren Schutzfolien andererseits nebeneinander angeordnet mit in Längsrichtung verlaufender Perforation zur Trennung der Schutzfolie für den Fahrzeugsitz einerseits von den weiteren Schutzfolien. Eine derartige Trennung kann korrelieren mit der Verwendungsreihenfolge durch den Monteur, indem dieser nach Trennung der genannten Perforation zunächst die Schutzfolie über den Fahrzeugsitz stülpt, ggf. mit "Ausklappen" des integriertem Schutzfolienteils für den Fußraum. Hieran anschließend kann sich der Monteur bereits auf den Fahrzeugsitz setzen und die weiteren Schutzfolien, die dann unter Umständen über weitere Perforationen voneinander zu trennen sind, auf den weiteren Fahrzeugteilen anordnen, beispielsweise auf dem Lenkrad, dem Wählhebel und dem Handbremshebel.

In weiterer Ausgestaltung dieses Gedankens besitzen die zwei oder mehr weiteren Schutzfolien eine Erstreckung in Richtung der genannten Längsachse, die ungefähr der Erstreckung der Schutzfolie für den Fahrzeugsitz entspricht. Damit ist die Breite des Materials der Kunststofffolie, welche für die weiteren Schutzfolien vorzusehen ist, gleich der Breite der Schutzfolie für den Fahrzeugsitz, so dass sämtliche Schutzfolien besonders platzsparend in der/den Kunststofffolie(n), dem Schutzfoliensatz, einer Folienbahn oder auf einer Rolle angeordnet sind. Weiterhin sind für diesen Grundgedanken die mehreren weiteren Schutzfolien, insbesondere die Schutzfolie für Wählhebel, Lenkrad und Handbremshebel, durch Perforationen voneinander trennbar, die quer zur Längsachse orientiert sind.

Gemäß einer weiteren erfindungsgemäßen Idee sind Schutzfolien seitlich begrenzt durch Faltungen, die sich dadurch ergeben, dass beispielsweise ein schlauchartiges Rohmaterial in einer Ebene randseitig gefaltet ist oder eine Kunststofffolie ein- oder mehrfach in eine Längs- oder Querrichtung gefaltet ist. Weiterhin kann eine Begrenzung der mindestens zwei Schutzfolien erfolgen durch quer zu der Längsachse orientierte Verschweißungen zwischen einer Vorderlage und einer Rücklage des Kunststoffmaterials. Schließlich ist es - alternativ oder kumulativ - möglich, dass die Begrenzung der mindestens zwei Schutzfolien erfolgt durch in Richtung der Längsachse orientierte Verschweißungen zwischen einer Vorderlage und einer Rücklage.

In weiterer Ausgestaltung der Erfindung ist in dem Schutzfoliensatz eine Schutzfolie für einen Sitzbezug über eine Perforation lösbar mit einer Schutzfolie für einen Fußraum verbunden. Hierbei kann die Schutzfolie für den Fußraum im unteren Randbereich, im oberen Randbereich oder im seitlichen Randbereich an die Schutzfolie für den Sitzbereich über die Perforation angebunden sein. Durchaus möglich ist auch, dass zusätzlich zu der Anbindung der Schutzfolie für den Fußraum in einem Randbereich in einem weiteren Randbereich mindestens eine weitere Schutzfolie angebunden ist. Weiterhin umfasst die vorliegende Erfindung auch die Ausgestaltung der genannten unterschiedlichen Schutzfolien mit unterschiedlichen Kunststofffolien aus unterschiedlichen Folienmaterialien und/oder mit unterschiedlichen Folienstärken.

Durchaus möglich ist, dass mehrere derartige Schutzfoliensätze separat voneinander bevorratet werden, oder, beispielsweise nach Faltung derselben, mehrere Schutzfoliensätze in einem Beutel oder Kasten bevorratet werden, aus welchem der Monteur dann jeweils bei Bedarf einen Schutzfoliensatz als eine Einheit entnehmen kann. Ebenfalls möglich ist, dass einzelne Schutzfoliensätze der zuvor erläuterten Art einzeln hergestellt werden aus jeweils einzelnen Kunststofffolien.

Die Schutzfolien können mit einem beliebigen Kunststoffmaterial gebildet sein. Möglich ist aber auch, dass eine oder mehrere Schutzfolie(n) aus einem Kunststoffmaterial bestehen, während mindestens eine andere Folie mit Papier oder einem Zellstoff gebildet ist oder aus diesem besteht. Beispielsweise kann die Schutzfolie für den Fußraum aus einer Bahn aus Papier hergestellt sein.

Für eine weitere Lösung der der Erfindung zugrunde liegenden Aufgabe schlägt die Erfindung allerdings vor, mehrere Schutzfoliensätze der zuvor erläuterten Art in einer gemeinsamen Folienbahn herzustellen, wodurch der Fertigungsprozess signifikant vereinfacht wird, insbesondere durch Einsatz einer "endlosen" Fertigung. Weiterhin möglich ist, dass für den Monteur die mehreren Schutzfoliensätze in Form einer Folienbahn bereitgestellt werden. In der erfindungsgemäßen Folienbahn sind die einzelnen Schutzfoliensätze voneinander trennbar durch quer zur Längsachse orientierte Perforationen. Benötigt somit der Monteur in der Werkstatt einen Schutzfoliensatz, trennt dieser den "vordersten" Schutzfoliensatz von der Folienbahn ab. Durchaus möglich ist allerdings auch, dass die einzelnen Schutzfoliensätze einzeln und nicht miteinander verbunden für den Benutzer bereitgestellt werden, beispielsweise bei Bevorratung mehrerer Schutzfoliensätze in einem Beutel oder einem Vorratskasten.

Während die Folienbahn in der Werkstatt in beliebiger Form bereitgehalten werden kann, beispielsweise auch bei Bereitstellung der Folienbahn mit mehreren sich mäanderförmig hin- und hergehend erstreckenden Lagen, ist für eine besondere Ausführungsform der Erfindung die Folienbahn zu einer Rolle aufgewickelt, die dann in dieser Form in der Werkstatt bevorratet werden kann, indem beispielsweise die Rolle drehbar an einem Traggerüst mit einer Tragachse gehalten ist, welche sich durch eine innere Hülse oder innere Wicklung der Rolle hindurch erstreckt. Hierdurch ist eine besonders kompakte Bereitstellung des Schutzfoliensatzes und der Folienbahn mit mehreren Schutzfoliesätzen möglich mit einer auch sehr einfachen Abnahmemöglichkeit der einzelnen Schutzfoliensätze. Insbesondere kann der Monteur oder Benutzer das vordere Ende der Folienbahn mit beiden Händen greifen und an der Folienbahn ziehen, so dass ein Schutzfoliensatz von der Rolle angewickelt wird. Ist die trennende Perforation zwischen benachbarten Schutzfoliensätzen von der Rolle abgewickelt, kann der Benutzer oder Monteur dann diese Perforationen durchreißen, so dass er lediglich einen Schutzfoliensatz in seiner Hand hält für die weitere Verwendung, nämlich das sukzessive Abdecken der Fahrzeugteile.

Für eine weitere erfindungsgemäße Folienbahn ist die Folienbahn mit mindestens einer Faltung zu einer Rolle aufgewickelt. Eine derartige Faltung kann dazu führen, dass die Längserstreckung der damit gebildeten Rolle verringert, beispielsweise halbiert oder gedrittelt wird, so dass die Rolle zur Bereitstellung der Folienbahn sowie des Schutzfoliensatzes eine kompaktere Ausbildung erhält und besser handhabbar ist. Weiterhin ist es möglich, dass durch mindestens eine Faltung gezielt auf die ausgebildete Dicke einer Wicklung auf der Rolle eingewirkt wird. Besitzt beispielsweise die Folienbahn Teilbereiche, in denen die Schichtdicke größer ist, beispielsweise infolge der Bildung dieses Teilbereichs mit einer stärkeren Folie und/oder auftragenden Verbindungen, würde dies zu einer ungleichmäßigen Mantelfläche der Wicklungen führen. Um dieses zu vermeiden kann in anderen Teilbereichen mittels einer Faltung die Windungsdicke "gedoppelt" oder "vervielfacht" werden, so dass ein Ausgleich erfolgt. Hierbei kann eine derartige Faltung auch lediglich in mindestens einem Randbereich der Folienbahn gebildet sein, damit sich im Randbereich der Rolle gleiche Durchmesser ergeben, während zwischen diesen Randbereichen variierende Windungsdicken unter Umständen hingenommen werden können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansicht eine erfindungsgemäße Folienbahn mit mehreren erfindungsgemäßen Schutzfoliensätzen, die jeweils mit mehreren über Perforationen zusammenhängenden Schutzfolien gebildet sind.
- **Fig. 2**: zeigt in einer räumlichen Ansicht eine weitere erfindungsgemäße Folienbahn mit mehreren weiteren erfindungsgemäßen Schutzfoliensätzen, die jeweils mit mehreren über Perforationen zusammenhängenden Schutzfolien gebildet sind.
- **Fig. 3 und 4**: zeigen in einer räumlichen Ansicht weitere Folienbahnen, die jeweils mit mehreren weiteren erfindungsgemäßen Schutzfoliensätzen gebildet sind.

### FIGURENBESCHREIBUNG

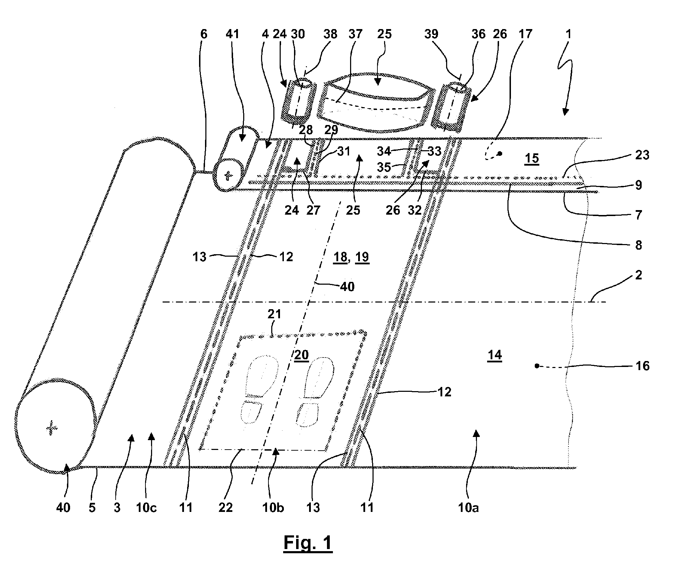

**Fig. 1** zeigt eine Folienbahn 1 mit einer Längsachse 2. Die Folienbahn 1 besteht für das dargestellte Ausführungsbeispiel aus einer schlauchartigen Kunststofffolie 3 sowie einer halbschlauchartigen oder geschlitzten schlauchartigen Kunststofffolie 4. Infolge der schlauchartigen Ausbildung besitzt die Kunststofffolie 3 zwei parallel zur Längsachse 2 orientierte Faltungen 5, 6 im seitlichen Randbereich, während die halbschlauchartige Kunststofffolie 4 lediglich über eine Faltung 7 verfügt. Bei paralleler Orientierung der jeweiligen Längsachsen sind die Kunststofffolien 3, 4 mit leichter Überlappung aufeinander gelegt und über eine in Richtung der Längsachse 2 durchgehende Verschweißung 8 im Bereich der Überlappung 9 miteinander verbunden. Die Faltung 6 kann aber auch entfallen, so dass es sich bei der Kunststofffolie 3 auch lediglich um einen Halbschlauch handeln kann.

In der Folienbahn 1 sind mehrere Schutzfoliensätze 10a, 10b, 10c ... in Richtung der Längsachse hintereinanderliegend angeordnet und über quer zur Längsachse 2 orientierte Perforationen 11 miteinander verbunden. Die Perforationen 11 erstrecken sich über die gesamt Breite der Folienbahn 1 und sind geradlinig ausgebildet. Unmittelbar benachbart den Perforationen 11, beispielsweise mit einem Abstand von ca. 0,5 cm bis 2 cm, insbesondere 0,8 cm bis 1,5 cm, erstreckt sich ebenfalls quer zur Längsachse 2 ebenfalls geradlinige, über die gesamte Breite der Folienbahn 1 verlaufende Schweißnähte 12, 13 auf beiden Seiten der Perforation 11. Die Kunststofffolien 3, 4 sind jeweils mit einer Vorderlage 14, 15, bei welcher es sich in der Fig. 1 um die obere, sichtbare Lage handelt, sowie einer Rücklage 16, 17, die in Fig. 1 durch die Vorderlagen 14, 15 verdeckt sind, gebildet. Die Verschweißungen 12, 13 sowie die Verschweißung 8 stellen eine stoffschlüssige Verbindung zwischen den Vorderlagen 14, 15 und den Rücklagen 16, 17 dar.

Die Schutzfoliensätze 10 beinhalten jeweils eine Schutzfolie 18, die ein Schutzfolienteil 19 für einen Fahrzeugsitz sowie einen Schutzfolienteil 20 für den Fußraum ausbildet. Hierzu ist in die Rücklage 16 der Kunststofffolie 4 ein U-förmiger Einschnitt 21 eingebracht, der quer zur Längsachse 2 orientiert ist mit quer zu der Faltung 5 orientierten Seitenschenkeln des U-förmigen Einschnitts 21. Der Einschnitt 21 kann als vollständige Durchtrennung ausgebildet sein oder mit Hilfe von Perforationen, wie dies strichpunktiert in Fig. 1 angedeutet ist. Wird diese Perforation durchtrennt, kann der zungenartige Schutzfolienteil 20 aus der Rücklage 16 herausgeklappt werden, so dass sich eine Faltung entsprechend der in Fig. 1 strichpunktierten Faltlinie 22 ergibt. Hierbei ist die Faltlinie 22 mit einem geringen Abstand, beispielsweise zwischen 10 cm und 20 cm von der Faltung 5 entfernt bei paralleler Orientierung zu derselben. Die Schutzfolie 18 ist entlang des gesamten Rands geschlossen infolge der Faltung 5, der Verschweißungen 12, 13 sowie der Verschweißung 8.

Auf der der Schutzfolie 18 abgewandten Seite der Verschweißung 8 verläuft eng benachbart zu dieser in Richtung der Längsachse 2 eine durchgehende Perforation 23, die ungefähr im Bereich der Faltung 6 angeordnet ist. Auf der der Schutzfolie 18 abgewandten Seite der Perforation 23 bildet die Kunststofffolie 4 eine Schutzfolie 24 für einen Wählhebel, eine Schutzfolie 25 für ein Lenkrad sowie eine Schutzfolie 26 für einen Handbremshebel.

Die Schutzfolie 24 für den Wählhebel ist von einer U-förmigen Verschweißung begrenzt, wobei
- ein Seitenschenkel der U-förmigen Verschweißung von der durchgehenden Verschweißung 12 gebildet ist,
- eine Verschweißung 27, die einen Grundschenkel des U bildet, unmittelbar benachbart der Perforation 23 angeordnet ist, parallel zur Längsachse 2 orientiert ist und beispielsweise eine Länge von 5 cm bis 20 cm besitzt und
- sich eine den anderen Seitenschenkel bildende Verschweißung 28 von der Verschweißung 27 quer zur Längsachse 2 erstreckt.

Außenliegend von der Verschweißung 28 ist eng benachbart zu dieser eine weitere Perforation 29 vorgesehen, die sich von der Perforation 23 quer zur Längsachse 2 bis zum äußeren Rand der Kunststofffolie 4 erstreckt. Mit Durchtrennen der Perforationen 11, 23 und 29 kann die Schutzfolie 24 für den Wählhebel aus der Folienbahn 2 herausgetrennt werden. Infolge der U-förmigen Verschweißung 12, 27, 28 ist die Schutzfolie 24 beutel- oder sackartig ausgebildet mit einer Öffnung 30, mit welcher die Schutzfolie 24 über einen Wählhebel gestülpt werden kann. Parallel zu der Verschweißung 28 ist auf der anderen Seite der Perforation 29 eng beabstandet von dieser eine weitere Verschweißung 31 vorgesehen, welche sich ebenfalls quer zur Längsachse 2 erstreckt, von der Perforation 23 ausgeht und bis zum äußeren Rand der Kunststofffolie 4 verläuft. Wie in Fig. 1 zu erkennen ist, ist in dem der Verschweißung 13 zugeordneten Randbereich des Schutzfoliensatzes 10 eine sack- oder beutelartige Schutzfolie 26 für den Handbremshebel ähnlich gebildet wie in der Schutzfolie 24, wobei eine U-förmige Verschweißung vorgesehen ist, bei welcher ein Seitenschenkel des U gebildet ist von der Verschweißung 13 im Bereich der Kunststofffolie 4, ein Grundschenkel des U gebildet ist von einer Verschweißung 32, die parallel zur Längsachse 2 orientiert ist und eng benachbart der Perforation 23 angeordnet ist mit einer Länge von 5 cm bis 20 cm sowie einer Verschweißung 33, die von dem Grundschenkel ausgeht bis zum äußeren Rand der Kunststofffolie bei Orientierung quer zur Längsachse 2. Eine Perforation 34 sowie eine Verschweißung 35 erstrecken sich von der Perforation 23 quer zur Längsachse 2 bis zum äußeren Rand der Kunststofffolie 4. Gegenüberliegend dem Grundschenkel mit der Verschweißung 32 bildet die Schutzfolie 26 eine Öffnung 36 über welche die Schutzfolie 26 auf den Handbremshebel aufgestülpt werden kann. Die Schutzfolie 25 ist seitlich begrenzt durch die Verschweißung 31, 35, während diese im Bereich ihrer weiteren Ränder offen ist infolge der Perforation 23 sowie des nicht geschlossenen Rands der Kunststofffolie 4 infolge deren Ausbildung als Halbschlauch. Eine geschlossene Längsachse 37 der Schutzfolie 25 erstreckt sich für die Abdeckung des Lenkrads des Kraftfahrzeugs in Umfangsrichtung des Lenkrads, so dass (wie oben in Fig. 1 dargestellt) die Schutzfolie 25 geöffnet wird durch Entfernung der Vorderlage 15 von der Rücklage 17, so dass die Schutzfolie 29 von außen über das Lenkrad gestülpt werden kann. Der Abstand der Verschweißungen 31, 35 entspricht somit ungefähr dem halben Umfang des Lenkrads. Vorzugsweise ist der Abstand der Verschweißungen 31, 35 um ca. 5 % bis 10 % kleiner als die Hälfte des Umfangs des Lenkrads, wobei in diesem Fall die Kunststofffolie 4 mit einem elastischen Material ausgebildet ist. Dies hat zur Folge, dass der mittige Bereich entlang der Längsachse 37 der Schutzfolie 25 radial außenliegend an dem Lenkrad anliegt, während die äußeren Randbereiche infolge der Elastizität nach innen gezogen werden, so dass die Schutzfolie 25 sich über einen Teilquerschnitt an das Lenkrad anlegen kann. Für eine derartige Ausgestaltung sind auch die Schutzfolien 24, 26 elastisch ausgebildet.

In Fig. 1 ist ersichtlich, dass für Anordnungen der Schutzfolien 24, 24, 26 in der Folienbahn 1 die Längsachsen 38, 39 der Schutzfolien 24, 26 quer zur Längsachse 2 der Folienbahn 1 orientiert sind, während die Längsachse 37 der Schutzfolie 25 parallel zur Längsachse 2 der Folienbahn 1 orientiert ist. Eine Längsachse 40 der Schutzfolie 18, welche mit der Längsachse des Fahrzeugsitzes bzw. der Hochachse der Rücklehne des Fahrzeugsitzes bei Benutzung der Schutzfolie 18 korreliert, ist quer zur Längsachse 2 der Folienbahn 1 orientiert.

Es versteht sich, dass die gewählte Anordnung der unterschiedlichen Schutzfolien 18, 24, 25, 26 in der Folienbahn 1 lediglich beispielhaft ist und beliebige anderweitige Anordnungen der Schutzfolien 18, 24, 25, 26 mit hieraus resultierendem anderen Verlauf der zugeordneten Perforationen und Verschweißungen ebenfalls möglich sind. Um lediglich ein Beispiel zu nennen ist es möglich, dass die U-förmigen Verschweißungen der Schutzfolien 24, 26 auch derart umgekehrt ausgebildet sein können, dass die Grundschenkel des U vom äußeren Rand der Kunststofffolie 4 ausgebildet sind, die in diesem Fall als Vollschlauch ausgebildet sein kann. In diesem Fall ist allerdings dann für die Schutzfolie 25 im äußeren Randbereich eine Perforation vorzusehen.

Weiterhin ist darauf hinzuweisen, dass für die Wahl der Kunststofffolien 3, 4 beliebige anderweitige Gestaltungsmöglichkeiten gegeben sind. Durchaus möglich ist, dass anstelle von zwei Kunststofffolien 3, 4 wie dargestellt lediglich eine Kunststofffolie Einsatz findet. Für den Fall des Einsatzes von zwei Kunststofffolien 3, 4 kann aber, wie angedeutet, ein unterschiedliches Material für die Kunststofffolien 3, 4 verwendet werden, indem beispielsweise die Kunststofffolie 4 eine größere Elastizität aufweist als die Kunststofffolie 3. Ebenfalls möglich ist, dass die Kunststofffolie 4 farblich gegenüber der Kunststofffolie 3 abgesetzt ist, um für den Benutzer zu kennzeichnen, dass bspw. ein nicht farblich gekennzeichneter Teil, der mit der Kunststofffolie 3 gebildet ist, für den Sitzbezug zu verwenden ist. Beliebige Aufdrucke auf die Kunststofffolien 3, 4 sind möglich. So ist Fig. 1 lediglich beispielhaft angedeutet, dass im Bereich des Schutzfolienteils 20 aufgedruckte Fußstapfen auf der Kunststofffolie 3 vorgesehen sind, die indizieren, dass dieser Teilbereich zungenartig auszuklappen ist und sich in dem Bereich des Fußraums des Kraftfahrzeuges erstrecken soll. Entsprechend möglich ist eine Aufbringung einer Kennzeichnung, beispielsweise durch geeignete Aufdrucke, im Bereich der anderen Schutzfolien 24, 25, 26. Ebenfalls denkbar ist, dass konkrete Bedienhinweise, beispielsweise für die Reihenfolge des Auseinanderreißens des Schutzfoliensatzes 10, auf einen Teil der Kunststofffolien 3, 4 aufgedruckt sind. Es versteht sich, dass auch für die Zusammensetzung einer oder mehrerer Kunststofffolien 3, 4 beliebige Gestaltungsmöglichkeiten gegeben sind, beispielsweise mit einem Falten einzelner Kunststofffolien, Bildung unterschiedlicher Lagen der Kunststofffolien, die dann miteinander verschweißt werden u. ä.. Weiterhin ist zu unterstreichen, dass sämtliche Anregungen aus der Druckschrift EP 2 008 866 A2 in die erfindungsgemäße Ausgestaltung integrierbar sind, nämlich durch Aufnahme der in EP 2 008 866 A2 offenbarten Merkmale für die Ausgestaltung der Schutzfolien 18.

In Fig. 1 ist eine vereinfachte Darstellung gewählt, bei welcher lediglich für den mittleren Schutzfoliensatz 10b die einzelnen Schutzfolien 18, 24, 25 mit zugeordneten Perforationen und Verschweißungen im Detail dargestellt sind. Hingegen sind für die benachbarten Schutzfoliensätze 10a, 10c diese Einzelheiten nicht dargestellt. Vielmehr soll in der Fig. 1 vorrangig im Bereich dieser weiteren Schutzfoliensätze 10a, 10c die Anordnung der einzelnen Schutzfoliensätze 10 in der Folienbahn 1 angedeutet sein.

Weiterhin sind in Fig. 1 oben zusätzlich zu den in der Einheit in der Folienbahn 1 vorgesehenen Schutzfolien 24, 25, 26 diese Schutzfolien 24, 25, 26 herausgetrennt und "geöffnet" für deren Einsatz zu einer Abdeckung des zugeordneten Kraftfahrzeugteils dargestellt.

Eine Fertigung der Folienbahn 1 erfolgt vorzugsweise in einem kontinuierlichen Prozess. Hierzu ist in Fig. 1 das Material für die Kunststofffolien 3, 4 bereitgestellt über Rollen 40, 41, von denen die Kunststofffolien 3, 4 kontinuierlich abgewickelt werden und in einem kontinuierlichen Herstellungsprozess mit den jeweiligen Verschweißungen und Perforationen versehen werden, wobei etwaige Aufdrucke bereits zuvor aufgebracht sein können oder auch erst jetzt während der vorgenannten Fertigungsschritte oder nach diesen aufgebracht werden. Es versteht sich, dass es durchaus möglich ist, dass das Material für die Kunststofffolien 3, 4 nicht von einer Rolle abgenommen wird, sondern vielmehr unmittelbar aus einem kontinuierlichen Fertigungsprozess mit einem Extrusionsverfahren und Herstellung der Kunststofffolien 3, 4 resultiert, die dann wie dargestellt zusammengeführt werden. Nicht dargestellt ist in Fig. 1, wie die derart gefertigte Folienbahn 1 dann mit Fertigstellung der Schutzfoliensätze 10 wieder zu einer Rolle aufgewickelt wird.

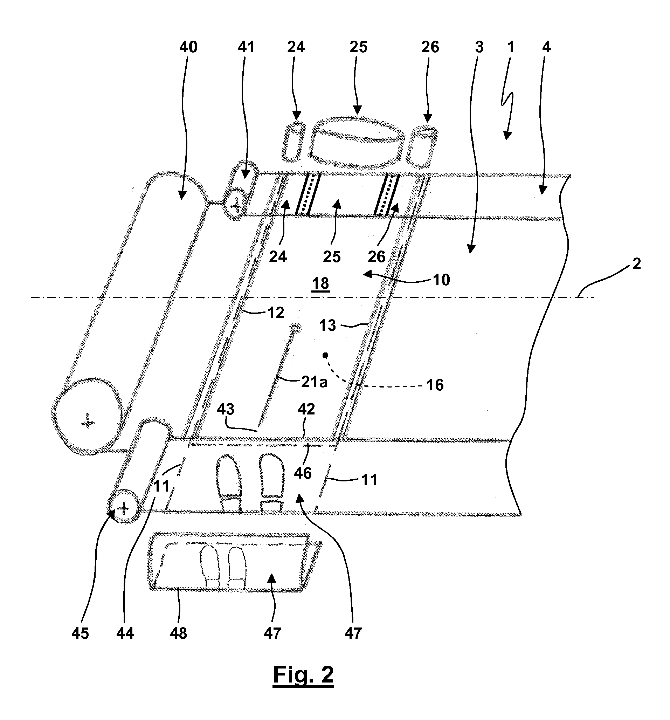

**Fig. 2** zeigt eine weitere Ausführungsform der Erfindung, bei welcher zunächst ein Teilbereich einer Folienbahn 1 mit zwei Kunststofffolien 3, 4, die über Rollen 40, 41 bereitgestellt werden, im Wesentlichen entsprechend dem Ausführungsbeispiel gemäß Fig. 1 ausgebildet ist. Allerdings ist für diese Ausführungsform die Schutzfolie 18 nicht mit einem Schutzfolienteil 19 für den Fahrzeugsitz sowie einem Schutzfolienteil 20 für den Fußraum ausgebildet. Vielmehr dient die Schutzfolie 18 ausschließlich dem Abdecken des Fahrzeugsitzes. Hierzu besitzt die Schutzfolie 18 einen Einschnitt 21 a, der schlitzartig ausgebildet ist. Für das dargestellte Ausführungsbeispiel erstreckt sich der Schlitz 21 a parallel zu den seitlichen Begrenzungen der Schutzfolie 18 in Form der Verschweißungen 12, 13 sowie ungefähr mittig zwischen diesen. Der Einschnitt 21 a setzt sich ungefähr von der Mitte in Richtung eines unteren Rands 42 fort, aber endet mit einem Zwischenbereich 43 vor diesem unteren Rand 42. Der Einschnitt 21 a erstreckt sich ausschließlich durch die Rücklage 16. Im Gebrauch wird der schlitzartige Einschnitt 21 a geöffnet, so dass die Schutzfolie 18 beispielsweise von oben über den Fahrzeugsitz gestülpt werden kann. Die Schutzfolie 18 deckt auch von oben die Sitzfläche des Fahrzeugsitzes ab, wobei die Schutzfolie 18 mit ihrem Endbereich sowie dem Zwischenbereich 43 um die vordere Kante oder den vorderen Rand des Fahrzeugsitzes gestülpt werden kann. In Abwandlung zu der dargestellten Ausführungsform ist es auch möglich, dass sich der Einschnitt 21a bis zum unteren Rand 42 erstreckt. In diesem Fall kann der untere Rand 42 mit einer Perforation oder offen ausgebildet sein, so dass sich die Bereiche der Rücklage 16, die sich seitlich von dem Einschnitt 21a befinden, seitlich des Fahrzeugsitzes erstrecken und seitlich von dem Fahrzeugsitz "herabhängen" können und somit Seitenbereiche der Sitzfläche des Fahrzeugsitzes schützen können.

Wie in Fig. 2 dargestellt, findet für das in Fig. 2 dargestellte Ausführungsbeispiel eine zusätzliche Kunststofffolie 44 Einsatz, die für das dargestellte Ausführungsbeispiel ebenfalls einer Rolle 45 entstammt, wobei die Kunststofffolie 44 abweichend auch einem kontinuierlichen Herstellungsprozess entstammen kann. Die Kunststofffolie 44 ist in dem in Fig. 2 unteren Endbereich über eine parallel zur Längsachse 2 orientierte Überlappung mittels einer Verschweißung an die Kunststofffolie 3 angebunden. Die Perforation 11 setzt sich durch die Kunststofffolie 44 fort. Unmittelbar benachbart des Rands 42 befindet sich in der Kunststofffolie 44 eine Perforation 46, die parallel zur Längsachse 2 orientiert ist und in Richtung der Längsachse durchgehend ausgebildet ist. Mit dem Durchtrennen der Perforationen 11 sowie 46 ist eine Schutzfolie 47 aus dem Schutzfoliensatz 10 herausgetrennt, die - nach Beseitigung einer Faltung 48 im unteren Randbereich - für das Abdecken eines Fußraums genutzt werden kann. Auf der Rolle 45 kann die Kunststofffolie 44 in Form eines Vollschlauchs bereitgestellt werden. Ebenfalls möglich ist, dass die Kunststofffolie 44 ein Halbschlauch ist mit der Faltung 48 und der Öffnung des Halbschlauchs in Richtung der Kunststofffolie 3. In einer Abwandlung der dargestellten Ausführungsform ist es ebenfalls möglich, dass die Folienbahn 44 lediglich mit einer Faltung bereitgestellt ist, wobei beispielsweise die obere Lage der Faltung eine größere Erstreckung quer zur Längsachse 2 besitzt als die untere Lage der Faltung. In diesem Fall kann lediglich die obere Lage über eine Verschweißung an die Kunststofffolie 3 angebunden sein und mit der Perforation 46 ausgestattet sein, während sich die Perforationen 11 durch beide Lagen der Faltung erstrecken.

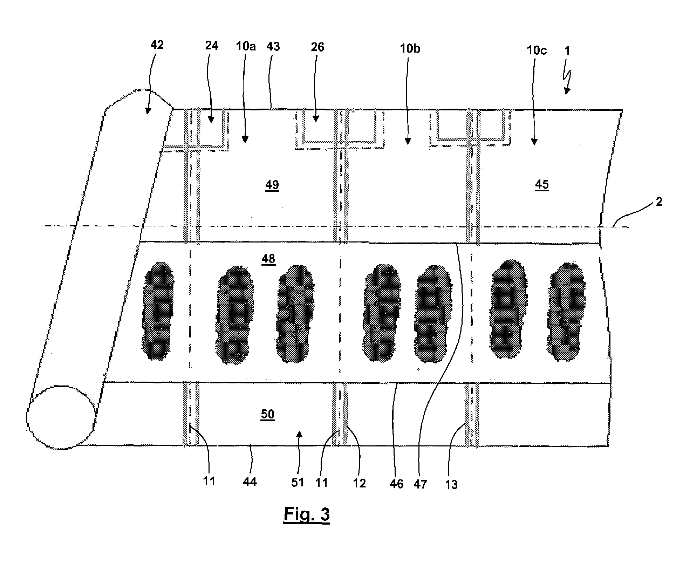

**Fig. 3** zeigt eine Ausführungsform einer Folienbahn 1, bei welcher von einer Rolle 42 ein schlauchartiges Material mit randseitigen Faltungen 43, 44 entnommen wird. Ausschließlich in die in Fig. 3 oben liegende Rücklage 45 sind zwei parallel zu der Längsachse 2 orientierte, in Richtung der Längsachse 2 durchgehende Einschnitte oder Perforierungen 46, 47 eingebracht. Gemeinsam mit den in Querrichtung durchgehenden Perforierungen 11 kann aus den Schutzfoliensätzen 10 eine Schutzfolie 48 herausgetrennt werden, die zum Abdecken eines Fußraums bestimmt ist. Verbleibende Teilbereiche 49, 50 der Rücklage 45 sind Teil einer Schutzfolie 51, welche für einen Fahrzeugsitz bestimmt ist. Hierbei bildet der Teilbereich 49, welcher über die Verschweißungen 12, 13 mit der Vorderlage verbunden ist, eine Tasche, welche von oben auf eine Rückenlehne des Fahrzeugsitzes aufgestülpt werden kann, womit die Faltung 43 zur Anlage an eine Oberseite der Rückenlehne (oder eine Kopfstütze) kommt. Der Teilbereich 50 bildet eine entsprechende, u. U. kürzer ausgebildete Tasche, welche von vorne auf eine Sitzfläche oder ein Sitzpolster des Fahrzeugsitzes aufgestülpt werden kann und ebenfalls durch die Verschweißungen 12, 13 sowie die Faltung 44 begrenzt ist. Der sich zwischen den derart gebildeten Taschen erstreckende verbleibende Teilbereich der Vorderlage, welcher in Fig. 3 hinter der Schutzfolie 48 angeordnet ist, erstreckt sich hierbei lose aufliegend von der Sitzfläche zu der Rückenlehne zur Überbrückung des Bereichs zwischen den Taschen. Als eine optionale Besonderheit verfügt der Foliensatz gemäß Fig. 3 ebenfalls über Schutzfolien 24, 26, die sackartig mit lediglich einer Öffnung ausgestaltet sind. Allerdings ist abweichend zu Fig. 1 nicht eine zusätzliche Schutzfolie 25 für ein Lenkrad zwischen diesen beiden Schutzfolien 24, 25 angeordnet. Es fehlt somit in dem zwischen den Schutzfolien 24, 26 angeordneten Teilbereich die Perforation 23 sowie eine Verschweißung 8, die für die Ausführungsform gemäß Fig. 1 vorhanden sind. Vielmehr gehen sowohl der Teilbereich 49 als auch die Vorderlage zwischen den Schutzfolien 24, 26 durch bis zur Faltung 43. Dies hat zur Folge, dass die mit dem Teilbereich 49 gebildete Tasche im oberen Endbereich eine Verjüngung oder Querschnittsverringerung, insbesondere einen Querschnittssprung, besitzt. Hierbei ist die verringerte Querschnittsgestaltung angepasst an die Dimensionen einer Kopfstütze, so dass mit dem verjüngten Querschnittsbereich eine Kopfstütze des Fahrzeugsitzes umschlossen werden kann, während eine Abstufung oder der Übergang des Querschnitts der Tasche auf der Oberseite der Rückenlehne des Fahrzeugsitzes aufliegen kann.

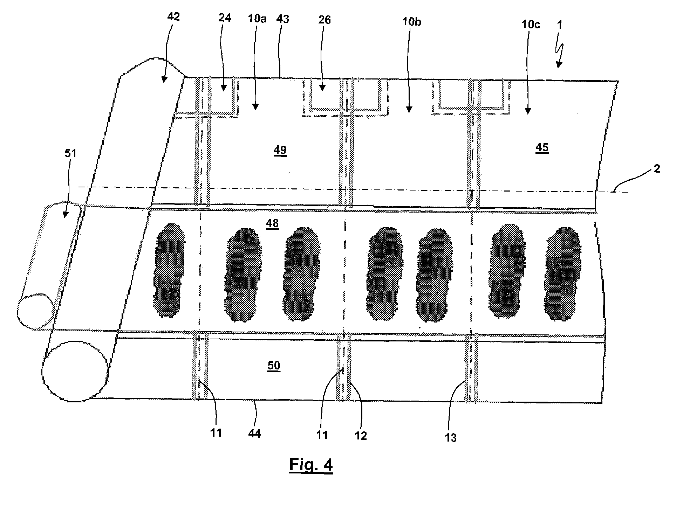

**Fig. 4** zeigt eine Folienbahn 1, deren Schutzfoliensätze grundsätzlich entsprechend dem in Fig. 3 dargestellten Ausführungsbeispiel ausgestaltet sind. Allerdings wird hier über eine Rolle 42 eine erste Kunststofffolie nicht über einen Vollschlauch bereitgestellt, sondern vielmehr über eine einfache bahnenförmige Folie, welche allerdings mit den Faltungen 43, 44 ausgestattet ist, so dass die Kunststofffolie in erster Näherung einen Querschnitt entsprechend einem abgeplatteten C besitzt, wobei der durchgehende Vertikalschenkel des C die Vorderlage bildet und die beiden verkürzten Vertikalschenkel des C (u. U. mit unterschiedlichen Längen, wie in Fig. 4 dargestellt) die Teilbereiche 49, 50 der Rückenlage bildet. Die oberen "Eckbereiche" des abgeplatteten C sind mit den Faltungen 43, 44 gebildet. Zwischen den verkürzten Vertikalschenkeln des C verbleibt ein freier Bereich der Rücklage 45. In diesem freien Bereich ist eine zweite Kunststofffolie gleichen oder unterschiedlichen Materials eingelegt, welche einer Rolle 51 entstammen kann. Möglich ist, dass diese zweite Kunststofffolie, die mit Aufdrucken für die Bestimmung der Kunststofffolie 48 versehen sein kann, lediglich lose in den verbleibenden Zwischenraum zwischen den Teilbereichen 49, 50 eingelegt ist. In diesem Fall werden beide den Rollen 42, 51 entstammenden Kunststofffolien gemeinsam mit den in Querrichtung orientierten, durchgehenden Perforationen 11 versehen. Ebenfalls möglich ist, dass die der Rolle 51 entstammende Kunststofffolie mindestens mit einem Teilbereich 49, 50 eine Überlappung ausbildet, im Bereich welcher dann eine in Richtung der Längsachse 2 orientierte punktierte oder durchgehende Verschweißung zwischen der zweiten Kunststofffolie mit dem zugeordneten Teilbereich 49, 50 der ersten Kunststofffolie erfolgen kann. In diesem Fall kann dann im Bereich der Überlappung eine zusätzliche Perforation in die Rücklage eingebracht sein, welche in Richtung der Längsachse 2 durchgehend ausgebildet sein kann, so dass über diese Perforation die Schutzfolie 48 für den Fußraum von der Schutzfolie für den Fahrzeugsitz abgetrennt werden kann.

Auf einer Rolle kann beispielsweise eine Folienbahn mit 100 Schutzfoliensätzen 10 aufgewickelt sein. Möglich ist, dass für die Kunststofffolie 3 eine Folie mit einer Schichtdicke von 15 µm eingesetzt ist, während für die Kunststofffolie 4 eine Folie mit einer Foliendicke von 40 µm verwendet wird, wobei diese Folie unter Umständen eine vergrößerte Elastizität besitzt. Für das Aufwickeln einer derart gebildeten Folienbahn 1 würde sich im Bereich der Kunststofffolie 4 gegenüber dem Bereich mit der Kunststofffolie 3 eine vergrößerte Windungsdicke ergeben. Um dieses zu vermeiden, kann die Kunststofffolie 3, beispielsweise im in Fig. 1 unteren Randbereich, über einen Teilbereich mit mindestens einer Faltung versehen sein, so dass sich hier die doppelte oder dreifache Schichtdicke, also eine Windungsdicke von 30 µm oder 45 µm ergibt. Möglich ist auch, dass über die Längserstreckung der Rolle verteilt mehrere derartige Stützwicklungen gebildet sind.

Möglich ist, dass in dem Schutzfoliensatz mehrere Schutzfolien wie vorstehend erläutert über Perforationen miteinander zu einer Einheit verbunden sind. Durchaus möglich ist ebenfalls, dass zusätzlich weitere Teile, die für den Kunden bestimmt sind, in einen Schutzfoliensatz eingelegt sind, wozu Schutzfolien oder der Schutzfoliensatz Taschen, Falten o. ä. bilden können zu Aufnahme der Teile oder zum teilweisen Einschließen der Teile. Bei diesen zusätzlich eingelegten Teilen kann es sich beispielsweise um Teile aus anderen Materialien handeln, beispielsweise aus Papier. Möglich ist, dass es sich hierbei um ein Wischtuch, eine Serviette oder eine Fußmatte aus Papier handelt.

Um lediglich ein Beispiel für eine weitere, von der Erfindung umfasste Ausführungsform zu nennen ist es möglich, dass zur Bildung der Schutzfolie für den Fußraum Papier verwendet wird, so dass in dem Schutzfoliensatz die Schutzfolien eine Einheit bilden, in welcher die Schutzfolien lösbar miteinander verbunden sind, aber einzelne Schutzfolien aus einer Kunststofffolie gebildet sind, während andere Schutzfolien, insbesondere die Schutzfolie für den Fußraum, aus einem anderen Material, hier Papier, gebildet sind. Der Einsatz einer Schutzfolie au Papier für den Fußbereich kann unter Umständen vorteilhaft sein hinsichtlich der Saugfähigkeit, der Steifigkeit, der Haptik u. ä.. Um eine Schutzfolie für den Fußbereich aus Papier zu ermöglichen, gibt es vielfältige Möglichkeiten. Um hier lediglich ein Beispiel zu nennen, kann die Rolle 51 gemäß Fig. 4 eine Rolle mit Papier zur Bildung der Schutzfolie für den Fußbereich sein. Eine derartige Bahn aus Papier wird dann verbunden mit den anderen Schutzfolien und Bahnen, wobei die Bahn aus Papier mit den weiteren Schutzfolien beispielsweise perforiert werden kann. Die Erfindung umfasst somit auch Ausführungsformen, bei welchen eine oder mehrere Schutzfolie aus Kunststoff bestehen oder mit diesem gebildet sind, während mindestens eine andere "Schutzfolien" mit Papier gebildet ist oder aus diesem besteht. Die Bezeichnung "Schutzfolie" so somit so auszulegen, dass diese auch ein Schutzelement aus Papier umfasst.

**BEZUGSZEICHENLISTE**

| | | | |
|---|---|---|---|
| 1 | Folienbahn | 32 | Verschweißung |
| 2 | Längsachse | 33 | Verschweißung |
| 3 | Kunststofffolie | 34 | Perforation |
| 4 | Kunststofffolie | 35 | Verschweißung |
| 5 | Faltung | 36 | Öffnung |
| 6 | Faltung | 37 | Längsachse |
| 7 | Faltung | 38 | Längsachse |
| 8 | Verschweißung | 39 | Längsachse |
| 9 | Überlappung | 40 | Rolle |
| 10 | Schutzfoliensatz | 41 | Rolle |
| 11 | Perforation | 42 | Rolle |
| 12 | Verschweißung | 43 | Faltung |
| 13 | Verschweißung | 44 | Faltung |
| 14 | Vorderlage | 45 | Rücklage |
| 15 | Vorderlage | 46 | Perforierung |
| 16 | Rücklage | 47 | Perforierung |
| 17 | Rücklage | 48 | Schutzfolie |
| 18 | Schutzfolie | 49 | Teilbereich |
| 19 | Schutzfolienteil Fahrzeugsitz | 50 | Teilbereich |
| 20 | Schutzfolienteil Fußraum | 51 | Rolle |
| 21 | Einschnitt | | |
| 22 | Faltlinie | | |
| 23 | Perforation | | |
| 24 | Schutzfolie Wählhebel | | |
| 25 | Schutzfolie Lenkrad | | |
| 26 | Schutzfolie Handbremshebel | | |
| 27 | Verschweißung | | |
| 28 | Verschweißung | | |
| 29 | Perforation | | |
| 30 | Öffnung | | |
| 31 | Verschweißung | | |

## Patentansprüche

1. Schutzfoliensatz (10) mit mehreren Schutzfolien (18; 24; 25; 26), die, insbesondere bei der Durchführung von Reparaturarbeiten, zum Abdecken von Fahrzeugteilen separat voneinander einsetzbar sind, **dadurch gekennzeichnet, dass** die Schutzfolien (18; 24; 25; 26) zu einer Einheit, aber lösbar miteinander verbunden sind.

2. Schutzfoliensatz (10) nach Anspruch 1, **dadurch gekennzeichnet, dass** die Schutzfolien (18; 24; 25; 26) über Perforationen (23; 29; 34) lösbar miteinander verbunden sind.

3. Schutzfoliensatz (10) nach Anspruch 1 oder 2, **dadurch gekennzeichnet, dass** mehrere Schutzfolien aus einer einzigen, gemeinsamen Kunststofffolie (24, 25, 26; 20, 19) hergestellt sind.

4. Schutzfoliensatz (10) nach Anspruch 1 oder 2, **dadurch gekennzeichnet, dass** mehrere Schutzfolien (18; 24; 25; 26) aus zwei oder mehr miteinander verschweißten Kunststofffolien (3, 4) hergestellt sind.

5. Schutzfoliensatz (10) nach Anspruch 4, **dadurch gekennzeichnet, dass** miteinander verschweißte Schutzfolien (3, 4) über unterschiedliche physikalische Eigenschaften und/oder unterschiedliche optische Kennzeichnungen verfügen.

6. Schutzfoliensatz (10) nach einem der vorhergehenden Ansprüche, **dadurch gekennzeichnet, dass** in dem Schutzfoliensatz (10) zumindest zwei der folgenden Schutzfolien enthalten sind:
a) eine Schutzfolie für einen Fahrzeugsitz,
b) eine Schutzfolie für einen Fußraum,
c) eine Schutzfolie (24) für einen Wählhebel,
d) eine Schutzfolie für eine Kopfstütze,
e) eine Schutzfolie (26) für einen Handbremshebel,
f) eine Schutzfolie (25) für ein Lenkrad,
g) eine gemeinsame Schutzfolie (18) für einen Fußraum, einen Fahrzeugsitz und/oder eine Kopfstütze.

7. Schutzfoliensatz (10) nach einem der vorhergehenden Ansprüche, **dadurch gekennzeichnet, dass** eine Schutzfolie (18) mit einem Schutzfolienteil (19) für einen Fahrzeugsitz und mit einem Schutzfolienteil (20) für den Fußraum hergestellt ist, wobei ein Einschnitt (21) den Schutzfolienteil (20) für den Fußraum und eine Ausnehmung des Schutzfolienteils (19) für den Fahrzeugsitz begrenzt.

8. Schutzfoliensatz (10) nach einem der vorhergehenden Ansprüche, **dadurch gekennzeichnet, dass** die Schutzfolien (18; 24; 25; 26) mit einer Kunststofffolie oder zwei oder mehreren miteinander verschweißten Kunststofffolien (3, 4) hergestellt sind, wobei die Schutzfolie (18) für den Fahrzeugsitz, insbesondere mit integriertem Schutzfolienteil (20) für den Fußraum, bei Blickrichtung in Richtung einer Längsachse (2) der Kunststofffolie(n) (3, 4) seitlich neben mindestens einer weiteren Schutzfolie (24; 25; 26) angeordnet ist, wobei die Schutzfolie (18) für den Fahrzeugsitz, insbesondere mit integriertem Schutzfolienteil (20) für den Fußraum, über in Richtung der Längsachse (2) orientierte Perforationen (23) mit der mindestens einen weiteren Schutzfolie (24; 25; 26) verbunden ist.

9. Schutzfoliensatz (10) nach Anspruch 8, **dadurch gekennzeichnet, dass** die Schutzfolie (18) für den Fahrzeugsitz, insbesondere mit integriertem Schutzfolienteil (20) für den Fußraum, bei Blickrichtung in Richtung der Längsachse (2) auf einer Seite neben zwei oder mehr weiteren Schutzfolien (24; 25; 26) angeordnet ist, wobei die Erstreckung der Schutzfolie (18) für den Fahrzeugsitz, insbesondere mit integriertem Schutzfolienteil (20) für den Fußraum, in Richtung der Längsachse (2) ungefähr der Summe der Erstreckungen der zwei oder mehr weiteren Schutzfolien (24; 25; 26) in Richtung der Längsachse (2) entspricht und zwischen den zwei oder mehr weiteren Schutzfolien (24; 25; 26) Perforationen (29; 34) vorgesehen sind, die quer zu der Längsachse (2) orientiert sind.

10. Schutzfoliensatz (10) nach einem der vorhergehenden Ansprüche, **dadurch gekennzeichnet, dass** die mindestens zwei Schutzfolien begrenzt sind durch
a) Faltungen (5, 6, 7),
b) quer zu der Längsachse (2) orientierte Verschweißungen (12; 13; 28; 31; 35; 33) zwischen einer Vorderlage (14; 15) und einer Rücklage (16; 17) und/oder
c) in Richtung der Längsachse (2) orientierte Verschweißungen (8; 27; 32) zwischen einer Vorderlage (14; 15) und einer Rücklage (16; 17).

11. Schutzfoliensatz (10) nach Anspruch 10, **dadurch gekennzeichnet, dass**
a) eine Schutzfolie (18) für einen Fahrzeugsitz, insbesondere mit integriertem Schutzfolienteil (20) für den Fußraum, quer zur Längsachse (2) der Kunststofffolie(n) orientiert ist, wobei
aa) ein unterer Endbereich der Schutzfolie (18) für den Fahrzeugsitz von einer Faltung (5) begrenzt ist,
ab) Seitenbereiche der Schutzfolie (18) für den Fahrzeugsitz begrenzt sind durch quer zur Längsachse (2) orientierte Verschweißungen (12; 13) zwischen einer Vorderlage (14) und einer Rücklage (16) und
ac) ein oberer Endbereich der Schutzfolie (18) für den Fahrzeugsitz begrenzt ist durch eine in Richtung der Längsachse (2) orientierte Verschweißung (8) zwischen einer Vorderlage (14, 15) und einer Rücklage (16, 17),
b) neben der Schutzfolie (18) für den Fahrzeugsitz, insbesondere mit integriertem Schutzfolienteil (20) für den Fußraum, eine Schutzfolie (24) für einen Wählhebel, eine Schutzfolie (26) für einen Handbremshebel und eine Schutzfolie (25) für ein Lenkrad bei Blickrichtung in Richtung der Längsachse (2) hintereinanderliegend angeordnet sind, wobei
ba) die Schutzfolie (24) für den Wählhebel und die Schutzfolie (26) für den Handbremshebel mit Ihren Längsachsen (38; 39) quer zur Längsachse (2) orientiert sind, während eine bei Abdeckung des Lenkrades in Umfangsrichtung des Lenkrads orientierte Achse (37) der Schutzfolie (25) für das Lenkrad parallel zu der Längsachse (2) orientiert ist,
bb) die Schutzfolie (24) für den Wählhebel, die Schutzfolie (26) für den Handbremshebel und die Schutzfolie (25) für das Lenkrad jeweils durch quer zur Längsachse (2) orientierte Verschweißungen (12; 28; 31; 35; 33; 13) begrenzt sind, wobei zwischen benachbarten Schutzfolien (24; 25; 26) quer zur Längsachse (2) orientierte Perforationen (29; 34) vorgesehen sind,
c) die Schutzfolien (24; 25; 26) für das Lenkrad, den Wählhebel und den Handbremshebel einerseits sowie die Schutzfolie (18) für den Fahrzeugsitz, insbesondere mit integriertem Schutzfolienteil (20) für den Fußraum, andererseits über eine in Richtung der Längsachse (2) verlaufende Perforation (23) voneinander trennbar sind.

12. Schutzfoliensatz (10) nach einem der vorhergehenden Ansprüche, **dadurch gekennzeichnet, dass** eine Schutzfolie (18) für einen Sitzbezug über eine Perforation (46) lösbar mit einer Schutzfolie (47) für einen Fußraum verbunden ist.

13. Schutzfoliensatz (10) nach einem der vorhergehenden Ansprüche, **dadurch gekennzeichnet, dass** in den Schutzfoliensatz weitere Teile oder Schutzfolien, beispielsweise in Faltungen des Schutzfoliensatzes oder Taschen einer Schutzfolie (18; 24; 25; 26), lose eingelegt sind.

14. Schutzfoliensatz (10) nach einem der vorhergehenden Ansprüche, **dadurch gekennzeichnet, dass** eine Schutzfolie für den Fußraum mit Papier gebildet ist.

15. Folienbahn (2) mit mehreren Schutzfoliensätzen (10a; 10b; 10c) nach einem der Ansprüche 1 bis 14, **dadurch gekennzeichnet, dass** die Schutzfoliensätze (10a; 10b; 10c) durch quer zur Längsachse (2) orientierte Perforationen (11) voneinander trennbar sind.

16. Folienbahn (2) nach Anspruch 15, **dadurch gekennzeichnet, dass** die Folienbahn (2) in einem endlosen Fertigungsprozess hergestellt ist.

17. Folienbahn (2) nach Anspruch 15 oder 16, **dadurch gekennzeichnet, dass** die Folienbahn (2) zu einer Rolle aufgewickelt ist.

18. Folienbahn (2) nach Anspruch 17, **dadurch gekennzeichnet, dass** die Folienbahn (2) mit mindestens einer Faltung zu einer Rolle aufgewickelt ist.

## Claims

1. A set of protective films (10) with a plurality of protective films (18; 24; 25; 26) which can be separately used to cover vehicle parts, especially during maintenance work, **characterised in that** the protective films (18; 24; 25; 26) are linked detachably into a unit.

2. The set of protective films (10) of claim 1, **characterised in that** the protective films (18; 24; 25; 26) are detachably linked by perforations (23; 29; 34).

3. The set of protective films (10) of claim 1 or 2, **characterised in that** multiple protective films are manufactured from a single common plastic film (24, 25, 26; 20, 19).

4. The set of protective films (10) of claim 1 or 2, **characterised in that** multiple protective films (18; 24; 25; 26) are manufactured from two or more plastic films (3, 4) welded to each other.

5. The set of protective films (10) of claim 4, **characterised in that** protective films (3, 4) welded to each other have different physical characteristics and/or different visual markings.

6. The set of protective films (10) of one of the preceding claims, **characterised in that** the set of protective films (10) contains at least two of the following protective films:
a) a protective film for a vehicle seat,
b) a protective film for a footwell,
c) a protective film (24) for a selector lever,
d) a protective film for a headrest,
e) a protective film (26) for a handbrake lever,
f) a protective film (25) for a steering wheel,
g) a common protective film (18) for a footwell, a vehicle seat and/or a headrest.

7. The set of protective films (10) of one of the preceding claims, **characterised in that** a protective film (18) is formed with a protective film part (19) for a vehicle seat and a protective film part (20) for the footwell, where an incision (21) limits the protective film part (20) for the footwell and an opening of the protective film part (19) for the vehicle seat.

8. The set of protective films (10) of one of the preceding claims, **characterised in that** the protective films (18; 24; 25; 26) are produced with a plastic film or two or more plastic films (3, 4) welded to each other, where the protective film (18) for the vehicle seat, especially with an integral protective film part (20) for the footwell, is located laterally from at least one further protective film (24; 25; 26) when looking into the direction of a longitudinal axis (2) of the plastic film(s) (3, 4), where the protective film (18) for the vehicle seat, especially with an integral protective film part (20) for the footwell, is linked with the at least one further protective film (24; 25; 26) by perforations (23) orientated in the direction of the longitudinal axis (2).

9. The set of protective films (10) of claim 8, **characterised in that** the protective film (18) for the vehicle seat, especially with an integral protective film part (20) for the footwell, is located on one side of two or more further protective films (24; 25; 26) when looking into the direction of the longitudinal axis (2), where the extension of the protective film (18) for the vehicle seat, especially with integral protective film part (20) for the footwell, in the direction of the longitudinal axis (2) equals approximately the sum of the extensions of the two or more further protective films (24; 25; 26) in the direction of the longitudinal axis (2) and where perforations (29; 34) are provided between the two or more further protective films (24; 25; 26) which are orientated transverse to the longitudinal axis (2).

10. The set of protective films (10) of one of the preceding claims, **characterised in that** the at least two protective films are limited by
a) folds (5, 6, 7),
b) welds (12; 13, 28; 31; 35; 33) between a front layer (14; 15) and a back layer (16; 17) orientated transverse to the longitudinal axis (2) and/or
c) welds (8; 27; 32) between a front layer (14; 15) and a back layer (16; 17) orientated in the direction of the longitudinal axis (2).

11. The set of protective films (10) of claim 10, **characterised in that**
a) a protective film (18) for a vehicle seat, especially with integral protective film part (20) for the footwell, is orientated transverse to the longitudinal axis (2) of the plastic film(s), where
aa) a lower end part of the protective film (18) for the vehicle seat is limited by a fold (5),
ab) side parts of the protective film (18) for the vehicle seat are limited by welds (12; 13) between a front layer (14) and a back layer (16) orientated transverse to a longitudinal axis (2) and
ac) an upper end region of the protective film (18) for the vehicle seat is limited by a weld (8) between a front layer (14, 15) and a back layer (16, 17) orientated in the direction of the longitudinal axis (2),
b) beside the protective film (18) for the vehicle seat, especially with integral protective film part (20) for the footwell, a protective film (24) for a selector lever, a protective film (26) for a handbrake lever and a protective film (25) for a steering wheel are located one behind another when looking in the direction of the longitudinal axis (2), where
ba) the protective film (24) for the selector lever and the protective film (26) for the handbrake lever are orientated transverse to the longitudinal axis (2) with their longitudinal axes (38; 39), while an axis (37) of the protective film (25) for the steering wheel orientated in a circumferential direction of the steering wheel when covering the steering wheel is orientated parallel to the longitudinal axis (2),
bb) the protective film (24) for the selector lever, the protective film (26) for the handbrake lever and the protective film (25) for the steering wheel are each limited by welds (12; 28; 31; 35; 33; 13) orientated transverse to the longitudinal axis (2), where between neighbouring protective films (24; 25; 26) perforations (29; 34) orientated transverse to the longitudinal axis (2) are provided.
c) the protective films (24; 25; 26) for the steering wheel, the selector lever and the handbrake lever on the one hand and the protective film (18) for the vehicle seat, especially with integral protective film part (20) for the footwell, on the other hand, can be separated by a perforation running in the direction of the longitudinal axis (2).

12. The set of protective films (10) of one of the preceding claims, **characterised in that** a protective film (18) for a seat cover is connected detachably to a protective film (47) for a footwell by a perforation (46).

13. The set of protective films (10) of one of the preceding claims, **characterised in that** further parts or protective films are loosely inserted into the set of protective films , for example into folds of the set of protective films or pockets of a protective film (18; 24; 25; 26).

14. The set of protective films (10) of one of the preceding claims, **characterised in that** a protective film for the footwell is built with paper.

15. A film web (2) with multiple sets of protective films (10a; 10b; 10c) of one of the claims 1 to 14, **characterised in that** sets of protective films (10a; 10b; 10c) are detachable from each other by perforations (11) orientated transverse to the longitudinal axis (2).

16. The film web (2) of claim 15, **characterised in that** the film web (2) has been produced in a continuous production process.

17. The film web (2) of claim 15 or 16, **characterised in that** the film web (2) is wound to a roll.

18. The film web (2) of claim 17, **characterised in that** the film web (2) is wound to a roll with at least one fold.

## Revendications

1. Jeu de feuilles de protection (10), comportant plusieurs feuilles de protection (18; 24; 25; 26), qui peuvent être utilisées, séparément les unes des autres, en particulier lors de la mise en oeuvre de travaux de réparation, pour recouvrir des parties d'automobile, **caractérisé en ce que** les feuilles de protection (18; 24; 25; 26) sont assemblées les unes aux autres pour former une unité, mais en étant détachables.

2. Jeu de feuilles de protection (10) selon la revendication 1, **caractérisé en ce que** les feuilles de protection (18; 24; 25; 26) sont assemblées les unes aux autres d'une manière détachable par l'intermédiaire de perforations (23; 29; 34).

3. Jeu de feuilles de protection (10) selon la revendication 1 ou 2, **caractérisé en ce que** plusieurs feuilles de protection sont fabriquées à partir d'une feuille plastique commune unique (24, 25, 26; 20, 19).

4. Jeu de feuilles de protection (10) selon la revendication 1 ou 2, **caractérisé en ce que** plusieurs feuilles de protection (18; 24; 25; 26) sont fabriquées à partir de deux feuilles plastiques (3, 4), ou plus, soudées les unes aux autres.

5. Jeu de feuilles de protection (10) selon la revendication 4, **caractérisé en ce que** des feuilles de protection (3, 4) soudées les unes aux autres disposent de propriétés physiques différentes et/ou de caractéristiques optiques différentes.

6. Jeu de feuilles de protection (10) selon l'une des revendications précédentes, **caractérisé en ce que** le jeu de feuilles de protection (10) contient au moins deux des feuilles de protection suivantes:
a) une feuille de protection pour un siège de véhicule,
b) une feuille de protection pour un espace pour les jambes,
c) une feuille de protection (24) pour un levier sélecteur,
d) une feuille de protection pour un appui-tête,
e) une feuille de protection (26) pour un levier de frein à main,
f) une feuille de protection (25) pour un volant de direction,
g) une feuille de protection commune (18) pour un espace pour les jambes, un siège de véhicule et/ou un appui-tête.

7. Jeu de feuilles de protection (10) selon l'une des revendications précédentes, **caractérisé en ce qu'**une feuille de protection (18) est fabriquée avec une partie de feuille de protection (19) pour un siège de véhicule et une partie de feuille de protection (20) pour l'espace pour les jambes, une entaille (21) délimitant la partie de feuille de protection (20) pour l'espace pour les jambes et un évidement aménagé dans la partie de feuille de protection (19) pour le siège de véhicule.

8. Jeu de feuilles de protection (10) selon l'une des revendications précédentes, **caractérisé en ce que** les feuilles de protection (18; 24; 25; 26) sont fabriquées avec une feuille plastique ou deux feuilles plastiques (3, 4), ou plus, soudées les unes aux autres, la feuille de protection (18) pour le siège de véhicule, comportant en particulier une partie de feuille de protection (20) intégrée pour l'espace pour les jambes, étant, quand on regarde dans la direction d'un axe longitudinal (2) de la ou des feuilles plastiques (3, 4), disposée latéralement à côté d'au moins une feuille de protection supplémentaire (24; 25; 26), la feuille de protection (18) pour le siège de véhicule, comportant en particulier une partie de feuille de protection intégrée (20) pour l'espace pour les jambes, étant, par l'intermédiaire de perforations (23) orientées dans la direction de l'axe longitudinal (2), assemblée à la ou aux feuilles de protection supplémentaires (24; 25; 26).

9. Jeu de feuilles de protection (10) selon la revendication 8, **caractérisé en ce que** la feuille de protection (18) pour le siège de véhicule, comportant en particulier une partie de feuille de protection (20) intégrée pour l'espace pour les jambes, est, quand on regarde dans la direction de l'axe longitudinal (2), disposée sur une côté, à côté de deux feuilles de protection supplémentaires (24; 25; 26) ou plus, l'extension de la feuille de protection (18) pour le siège de véhicule, comportant en particulier une partie de feuille de protection intégrée (20) pour l'espace entre les jambes, correspondant approximativement, dans la direction de l'axe longitudinal (2), à la somme des extensions des deux ou plus feuilles de protection supplémentaires (24; 25; 26) dans la direction de l'axe longitudinal (2), et des perforations (29; 34), qui sont orientées transversalement par rapport à l'axe longitudinal (2), étant orientées entre les deux ou plus feuilles de protection supplémentaires (24; 25; 26).

10. Jeu de feuilles de protection (10) selon l'une des revendications précédentes, **caractérisé en ce que** les au moins deux feuilles de protection sont délimitées par
a) des plis (5, 6, 7),
b) des soudures (12; 13; 28; 31; 35; 33) orientées transversalement par rapport à l'axe longitudinal (2), entre une couche avant (14; 15) et une couche arrière (16; 17) et/ou
c) des soudures (8; 27; 32) orientées dans la direction de l'axe longitudinal (2), entre une couche avant (14; 15) et une couche arrière (16; 17).

11. Jeu de feuilles de protection (10) selon la revendication 10, **caractérisé en ce que**
a) une feuille de protection (18) pour un siège de véhicule, en particulier comportant une partie de feuille de protection intégrée (20) pour l'espace pour les jambes, est orientée transversalement par rapport à l'axe longitudinal (2) de la ou des feuilles plastiques,
aa) une zone terminale inférieure de la feuille de protection (18) pour le siège de véhicule étant délimitée par un pli (5),
ab) des zones latérales de la feuille de protection (18) pour le siège de véhicule étant délimitées par des soudures (12; 13), orientées transversalement par rapport à l'axe longitudinal (2), entre une couche avant (14) et une couche arrière (16), et
ac) une zone terminale supérieure de la feuille de protection (18) pour le siège de véhicule étant délimitée par une soudure (8), orientée dans la direction de l'axe longitudinal (2), entre une couche avant (14, 15) et une couche arrière (16, 17),
b) à côté de la feuille de protection (18) pour le siège de véhicule, en particulier comportant une partie de feuille de protection intégrée (20) pour l'espace pour les jambes, une feuille de protection (24) pour un levier sélecteur, une feuille de protection (26) pour un levier de frein à main et une feuille de protection (25) pour un volant de direction étant disposées l'une derrière l'autre quand on regarde dans la direction de l'axe longitudinal (2),
ba) la feuille de protection (24) pour le levier sélecteur et la feuille de protection (26) pour le levier de frein à main étant, par leurs axes longitudinaux (38; 39), orientées transversalement par rapport à l'axe longitudinal (2), un axe (37) de la feuille de protection (25) pour le volant de direction, orienté lors du recouvrement du volant de direction dans la direction périphérique du volant de direction, étant orienté parallèlement à l'axe longitudinal (2),
bb) la feuille de protection (24) pour le levier sélecteur, la feuille de protection (26) pour le levier de frein à main et la feuille de protection (25) pour le volant de direction étant chacune délimitée par des soudures (12; 28; 31; 35; 33; 13) orientées transversalement par rapport à l'axe longitudinal (2), des perforations (29; 34), orientées perpendiculairement à l'axe longitudinal (2), étant prévues entre des feuilles de protection voisines (24; 25; 26),
c) les feuilles de protection (24; 25; 26) pour le volant de direction, le levier sélecteur et le levier de frein à main d'une part, ainsi que la feuille de protection (18) pour le siège de véhicule, en particulier comportant une partie de feuille de protection intégrée (20) pour l'espace pour les jambes, d'autre part, pouvant être séparées l'une de l'autre par l'intermédiaire d'une perforation (23) courant dans la direction de l'axe longitudinal (2).

12. Jeu de feuilles de protection (10) selon l'une des revendications précédentes, **caractérisé en ce qu'**une feuille de protection (18) pour une garniture de siège est assemblée d'une manière détachable, par l'intermédiaire d'une perforation (46), à une feuille de protection (47) pour un espace pour les jambes.

13. Jeu de feuilles de protection (10) selon l'une des revendications précédentes, **caractérisé en ce que** d'autres parties ou feuilles de protection sont insérées d'une manière lâche dans le jeu de feuilles de protection, dans des plis du jeu de feuilles de protection ou des poches aménagées dans une feuille de protection (18; 24; 25; 26).

14. Jeu de feuilles de protection (10) selon l'une des revendications précédentes, **caractérisé en ce qu'**une feuille de protection pour l'espace pour les jambes est formée de papier.

15. Feuille continue (2), comportant plusieurs jeux de feuilles de protection (10a; 10b; 10c) selon l'une des revendications 1 à 14, **caractérisée en ce que** les jeux de feuilles de protection (10a; 10b; 10c) peuvent être séparées l'une de l'autre par des perforations (11) orientées transversalement par rapport à l'axe longitudinal (2).

16. Feuille continue (2) selon la revendication 15, **caractérisée en ce que** la feuille continue (2) est fabriquée dans un procédé continu de fabrication.

17. Feuille continue (2) selon la revendication 15 ou 16, **caractérisée en ce que** la feuille continue (2) est enroulée pour former un rouleau.

18. Feuille continue (2) selon la revendication 17, **caractérisée en ce que** la feuille continue (2) est enroulée par au moins un pli pour former un rouleau.
